# EUROPÄISCHE PATENTSCHRIFT

(11) **EP 2 500 789 B1**
(45) Veröffentlichungstag und Bekanntmachung des Hinweises auf die Patenterteilung: **22.04.2020**
(21) Anmeldenummer: 12158367.8
(22) Anmeldetag: 07.03.2012
(51) Int. Cl.: G05B 19/414, B25J 9/16

(54) **Roboter und Verfahren zum Betreiben eines Roboters**
Robot and method for operating a robot
Robot et procédé de fonctionnement d'un robot

(30) Priorität: 14.03.2011 DE 102011005513
(43) Veröffentlichungstag der Anmeldung: 19.09.2012
(73) Patentinhaber: KUKA Deutschland GmbH, 86165 Augsburg (DE)
(72) Erfinder: Finkemeyer, Bernd, 24119 Kronshagen (DE)
(74) Vertreter: Böss, Dieter Alexander

(56) Entgegenhaltungen:
- Milighetti, Giulio: "Multisensorielle diskret-kontinuierliche Überwachung und Regelung humanoider Roboter", Karlsruher Schriften zur Anthropomatik KIT Scientific Publishing, Karlsruhe, Bd. 6 22. November 2010 (2010-11-22), XP002770870, ISBN: 9783866445680 Gefunden im Internet: URL:http://dx.doi.org/10.5445/KSP/10000197 96 [gefunden am 2017-06-14]

## Beschreibung

Die Erfindung betrifft einen Roboter und ein Verfahren zum Betreiben eines Roboters.

Roboter im Allgemeinen sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Roboter weisen üblicherweise einen Roboterarm mit mehreren Gliedern und programmierbare Steuerungen (Steuervorrichtungen) auf, die während des Betriebs die Bewegungsabläufe des Roboterarms steuern bzw. regeln. Die Antriebe sind z.B. elektrische Antriebe.

Kröger T, et. al. offenbaren in "Manipulation Primitives - A Universal Interface Between Sensor-Based Motion Control and Robot Programming", Robot Systems for Handling and Assembly, Springer tracts in advanced robotics Vol. 67, Springer Verlag, 2010, Seiten 293-313, ein Verfahren zum Betreiben eines Roboters, bei dem während der automatischen Bewegung des Roboterarms zwischen unterschiedlichen Steuerungs-/Regelungsfunktionalitäten bzw. Strategien umgeschaltet wird.

Milighetti Giulio beschreibt in "Multisensorielle diskretkontinuierliche Überwachung und Regelung humanoider Roboter", KIT Scientific Publishing, Karlsruher Schriften zur Anthropomatik, Band 6, 2010, wie eine obere diskrete Reglerebene vorsieht, einen komplexen Handlungsplan eines Roboters in eine dynamisch konfigurierbare Folge einfacher Aktionsprimitive zu zerlegen. In der unteren kontinuierlichen Reglerebene werden für jedes Aktionsprimitiv die hierfür benötigten kontinuierlichen Regler aktiviert und die optimalen Parameter ausgewählt. Auf der Grundlage des vorgeschlagenen flexiblen diskret-kontinuierlichen Überwachungs- und Regelungskonzepts wird der Roboter befähigt, verschiedene perzeptorisch geregelte Grundgeschicklichkeiten in einer menschenähnlichen Art und Weise zu verrichten.

Die Aufgabe der Erfindung ist es, ein verbessertes Verfahren zum Betreiben eines Roboters bzw. einen dementsprechend eingerichteten Roboter anzugeben.

Die Aufgabe der Erfindung wird gelöst durch ein Verfahren zum Betreiben eines Roboters, der einen mehrere, nacheinander folgende Glieder, eine Befestigungsvorrichtung zum Befestigen eines Endeffektors und Antriebe zum Bewegen der Glieder aufweisenden Roboterarm und eine mit den Antrieben verbundene Steuervorrichtung aufweist, in der eine hierarchische Regelungs-/Steuerungsstrategie mit mehreren, unterschiedlich priorisierten Regelungs-/ Steuerungsfunktionalitäten gespeichert ist, aufweisend folgenden Verfahrensschritt: während der Bewegung des Roboterarms, Umschalten in eine höher priorisierte Regelungs-/ Steuerungsfunktionalität, sobald eine stabile Bewegung des Roboterarms mittels der höher priorisierten Regelungs-/ Steuerungsfunktionalität möglich ist und eine, von der höher priorisierten Regelungs-/ Steuerungsfunktionalität unabhängige Ausführungsbedingung erfüllt ist, wobei für wenigstens zwei für die Bewegung des Roboterarms vorgesehene Freiheitsgrade voneinander unabhängige priorisierte Regelungs-/ Steuerungsfunktionalitäten vorhanden sind und für wenigstens einen der Freiheitsgrade ein Umschalten in eine höher priorisierte Regelungs-/ Steuerungsfunktionalität erfolgt, sobald eine stabile Bewegung des Roboterarms mittels der entsprechenden höher prioristierten Regelungs-/ Steuerungsfunktionalität möglich ist und zumindest für diesen Freiheitsgrad die, von der höher prioristierten Regelungs-/ Steuerungsfunktionalität unabhängige Ausführungsbedingung erfüllt ist.

Ein weiterer Aspekt der Erfindung betrifft einen Roboter, aufweisend
- einen Roboterarm, der mehrere nacheinander folgende Glieder, eine Befestigungsvorrichtung zum Befestigen eines Endeffektors und Antriebe zum Bewegen der Glieder aufweist, und
- eine mit den Antrieben verbundene Steuervorrichtung, in der eine hierarchische Regelungs-/ Steuerungsstrategie mit mehreren, unterschiedlich priorisierten Regelungs-/ Steuerungsfunktionalitäten gespeichert ist und die eingerichtet ist, den Roboterarm gemäß dem erfindungsgemäßen Verfahren zu bewegen.

Gemäß dem erfindungsgemäßen Verfahren bzw. dem erfindungsgemäßen Roboter wird die automatische Bewegung des Roboterarms aufgrund einer hierarchisch strukturierten Regelungs-/ Steuerungsstrategie durchgeführt, wobei automatisch in eine höher priorisierte Regelungs-/ Steuerungsfunktionalität geschaltet wird, sobald die höher priorisierte Regelungs-/ Steuerungsfunktionalität eine stabile Bewegung des Roboterarms erlaubt. Dies ist dann z.B. möglich, wenn beispielsweise für die fragliche Regelungs-/ Steuerungsfunktionalität Sensordaten oder Sensorsignale nötig sind, die erst ab einer bestimmten Position, Orientierung oder Lage (Position und Orientierung) z.B. der Befestigungsvorrichtung oder eines dem Roboter zugeordneten Tool Center Points verfügbar sind. Somit kann der Roboter automatisch in die höher priorisierte Regelungs-/ Steuerungsfunktionalität umschalten, sobald dies steuer- bzw. regelungstechnisch möglich ist.

Erfindungsgemäß wird jedoch außerdem nur dann in die höher priorisierte Regelungs- / Steuerungsfunktionalität umgeschaltet, wenn die von der höher priorisierten Regelungs-/ Steuerungsfunktionalität unabhängige Ausführungsbedingung erfüllt ist. Dadurch ist es möglich, die Regelungs-/ Steuerungsstrategie des Roboters genauer zu beschreiben und gleichzeitig eine relativ schnelle Reaktion des Roboters bezüglich des Umschaltens zu erreichen.

Nach einer Ausführungsform des erfindungsgemäßen Verfahrens weist dieses zusätzlich den folgenden Verfahrensschritt: während der Bewegung des Roboterarms, Umschalten in eine nieder priorisierte Regelungs-/ Steuerungsfunktionalität, sobald die von der höher priorisierten Regelungs-/ Steuerungsfunktionalität unabhängige Ausführungsbedingung nicht mehr erfüllt ist. Dadurch wird erreicht, dass wenn die Ausführungsbedingung nicht mehr vorliegt, automatisch in eine niederpriore Regelungs-/ Steuerungsfunktion umgeschaltet wird, mittels derer die automatische Bewegung des Roboterarms fortgesetzt wird.

Nach einer weiteren Ausführungsform des erfindungsgemäßen Verfahrens weist dieses zusätzlich den folgenden Verfahrensschritt: während der Bewegung des Roboterarms, Umschalten in eine nieder priorisierte Regelungs-/ Steuerungsfunktionalität, sobald eine stabile Bewegung des Roboterarms mittels der höher priorisierten Regelungs-/ Steuerungsfunktionalität unmöglich ist. Dadurch wird eine Gefahr eines instabilen Zustands des Roboters verringert.

Nach dem erfindungsgemäßen Verfahren sind für wenigstens zwei für die Bewegung des Roboterarms vorgesehene Freiheitsgrade voneinander unabhängige priorisierten Regelungs-/ Steuerungsfunktionalitäten vorgesehen sind. So ist es möglich, dass ein Umschalten zwischen den unterschiedlichen Regelungs-/ Steuerungsfunktionalitäten pro Freiheitsgrad und unabhängig voneinander erfolgen kann.

Für wenigstens einen der Freiheitsgrade erfolgt außerdem ein Umschalten in eine höher priorisierte Regelungs-/ Steuerungsfunktionalitäten, sobald eine stabile Bewegung des Roboterarms mittels der entsprechenden höher priorisierten Regelungs-/ Steuerungsfunktionalität möglich ist und zumindest für diesen Freiheitsgrad die, von der höher priorisierten Regelungs-/ Steuerungsfunktionalität unabhängige Ausführungsbedingung erfüllt ist. Insbesondere kann es vorgesehen sein, dass für jeden der fraglichen Freiheitsgrade eine eigene Ausführungsbedingung vorgesehen ist, die von der dem fraglichen Freiheitsgrad zugeordneten höher priorisierten Regelungs-/ Steuerungsfunktionalität unabhängig ist.

Vorzugsweise ist die unabhängige Ausführungsbedingung einem anderen Freiheitsgrad zugeordnet als dem der fraglichen Regelungs-/ Steuerungsfunktionalität. Dadurch kann gegebenenfalls eine für die Anwendung günstige Regelungs-/ Steuerungsstrategie implementiert werden.

Die Ausführungsbedingung kann auch einer Sicherheitsbedingung des Roboters zugeordnet sein. Diese kann beispielsweise durch eine Kollisionsüberwachung realisiert werden, sodass beispielsweise eine bestimmte Regelungs-/ Steuerfunktionalität nur dann ausgeführt wird, wenn die Kollisionsüberwachung keine Kollision des mittels des Roboterarms bewegten Objekts erkennt. Die Sicherheitsbedingung kann auch durch eine Sicherheitssteuerung überprüft werden. Die Sicherheitssteuerung ist insbesondere eine externe Sicherheitssteuerung, z.B. eine SPS, die mit der Steuervorrichtung des Roboters verbunden ist.

Das erfindungsgemäße Verfahren bietet gegebenenfalls ein relativ flexibles und/oder dynamisches Umschalten zwischen mehreren Regelungs- / Steuerungsfunktionenen währen der automatischen Bewegung des Roboterarms

In den Randbedingungen, d.h. der Ausführungsbedingung werden vorzugsweise alle der Steuervorrichtung verfügbaren Signale verarbeitet. Die Signalquellen können in Module gekapselt sein. Ebenfalls können die beteiligten Algorithmen, zwischen denen umgeschaltet wird, in Module gekapselt sein.

Werden unterschiedliche Regelungs-/ Steuerungsfunktionalitäten für verschiedene Freiheitsgrade insbesondere unabhängig verwendet, dann kann den gegebenenfalls vorhandenen alternativen Modulen mitgeteilt werden, ob generierte Stell- und/oder Regelgrößen im vorherigen Zyklus verwendet wurden. D.h. es wird ermöglicht, zu entscheiden, ob ihre Stell- bzw. Regelaktion erfolgreich war.

Aufgrund des erfindungsgemäßen Verfahrens kann gegebenenfalls sicher gestellt werden, dass immer eine Alternativregelung bzw. -steuerung das System stabilisieren kann.

Die Kombinationsmöglichkeiten der Steuerungs- und Regelungsalternativen werden vorzugsweise eindeutig in einem Kommando definiert, indem beispielsweise der Applikationsschnittstelle der Steuerung gegebenenfalls eine Grammatik bereit gestellt wird, mit der die Umschaltbedingungen und die beteiligten Module eindeutig definiert werden können.

Es kann vorgesehen sein, dass jedem orthogonalen Freiheitsgrad in der Beauftragung, d.h. während der automatischen Bewegung des Roboterarms im Bewegungssatz vorzugsweise mindestens ein verantwortliches Modul inklusive Sollwert und Parametrisierung zur Übernahme der Kontrolle zugeordnet wird. Zusätzlich können ein oder mehrere Alternativmodule mit entsprechendem Sollwert und Parametersatz definiert werden, die den unterschiedlichen Regelungs-/ Steuerungsfunktionalitäten zugeordnet sind. Die Alternativen können durchnummeriert sein. Die vergebene Nummer kann dabei der Priorität der Alternative, d.h. der fraglichen Regelungs-/ Steuerungsfunktionalität entsprechen. Beispielsweise kann ein Originalmodul bzw. die Regelungs-/ Steuerungsfunktionalität mit der höchsten Priorität die Nummer 0 aufweisen. Wenn diese nicht zur Ausführung kommen kann, wird die 1. Alternative gewählt. Sie hat die Nummer 1. Falls diese auch nicht die Kontrolle übernehmen kann, wird gegebenenfalls eine 2. Alternative mit der Nummer 2 versucht aktiviert zu werden. Dies kann beliebig fortgesetzt werden.

Jeder Auswahlalternative kann eine Ausführungsbedingung übergeben werden. Diese ist insbesondere ein boolscher Ausdruck. In ihm können beispielsweise beliebige, dem System bzw. der Steuervorrichtung bekannte Werte verarbeitet werden. Die Werte können von allen im System verfügbaren Modulen stammen.

Beispielsweise kann es vorgesehen sein, in x-Richtung eines kartesischen Koordinatensystems eine Kontaktkraft, mit der der Roboterarm z.B. ein Objekt abstellen soll, und in y-Richtung des kartesischen Koordinatensystems z.B. mit Hilfe eines Kamerasystems eine Position einzustellen. Zu diesem Zweck kann für die x-Richtung ein relativ präzises erstes Kraftregelungsmodul (Kraftregelfunktionalität) ausgewählt werden. Dieses kann eingerichtet sein, relativ genau eine Kontaktkraft einzustellen bzw. den Roboterarm derart zu bewegen, dass die gewollte Kontaktkraft relativ genau auf das mittels des Roboters bewegten Objekts wirkt. Voraussetzung ist allerdings, dass ein Kontakt des Objekts mit seiner Umgebung schon hergestellt wurde. Als Ausführungsbedingung kann angegeben werden, dass sich der quadratische Regelfehler innerhalb einer konstanten ε-Umgebung befinden muss. Solange dies nicht der Fall ist, kann es vorgesehen sein, dass ein zweites Kraftregelungsmodul (Kraftregelfunktionalität) die Kontrolle der Bewegung des Roboterarms übernimmt. Dieses ist beispielsweise für die Kontaktherstellung des Objekts mit einer Fläche optimiert. Es wird jedoch nur dann aktiviert, wenn bereits eine Kontaktkraft messbar ist. Dies wird beispielsweise mit der Ausführungsbedingung "Kraft >100N" sichergestellt. Falls diese nicht erfüllt ist, kann eine Geschwindigkeitssteuerung die Kontrolle der Bewegung des Roboterarms übernehmen. Dies geschieht allerdings nur unter der Randbedingung (Ausführungsbedingung), dass beispielsweise ein Kollisionsvermeidungs-Modul keine Kollisionsgefahr meldet.

Für dieses Beispiel kann für die y-Richtung das Kamerasystem ausgewählt und eine entsprechende Randbedingung (Ausführungsbedingung) formuliert sein. In ihr kann vorzugsweise sichergestellt sein, dass das Kamerasystem nur die Kontrolle der Bewegung des Roboterarms übernimmt, wenn in x-Richtung bereits ein stabiler Kontakt des Objekts mit seiner Umgebung hergestellt wurde und wenn das Kamerasystem z.B. bereits ein zu positionierendes Bildmerkmal erkannt hat. Andernfalls kann mit einer vordefinierten Geschwindigkeit der Roboterarm verfahren werden, bis das Bildmerkmal erkannt wird.

Jedes beteiligte Regelungs-/ Steuerungsmodul bzw. jede Regelungs-/ Steuerungsfunktionalität kann beispielsweise insbesondere zyklisch ein Flag mitliefern. Dieses signalisiert z.B., ob die zugeordnete Regelungs-/ Steuerungsfunktionalität prinzipiell in der Lage ist, die Kontrolle der Bewegung des Roboterarms zu übernehmen. Dies ist beispielsweise der Fall, wenn es auf "true" gesetzt ist. Dieses Flag kann obligatorisch immer mit der Ausführungsbedingung "UND"-verknüpft sein. Damit kann sichergestellt werden, dass nur stabile Stellgrößen aktiviert werden können. Somit liegt die Stabilitätsverantwortung bei dem entsprechenden Modul bzw. bei der entsprechenden Regelungs-/ Steuerungsfunktionalität.

Intern, d.h. in der Steuervorrichtung, können pro Steuerungstakt alle beteiligten Modulsignale eingesammelt und entsprechend wie beschrieben ausgewertet werden. Als Ergebnis kommt insbesondere für jeden Freiheitsgrad eine Stellgröße heraus. Diese wird dann an die unteren Regelungs-/ Steuerungsschichten weitergeleitet.

Falls keins der angegebenen Alternativmodule die Kontrolle übernehmen kann, kann auf eine Default-Backup-Steuerung umgeschaltet werden. Diese Backupsteuerung hat nur die Aufgabe, die Bewegung des Roboterarms zu stabilisieren. Sie trägt nicht zur Erfüllung der aktuellen Applikationsaufgabe bei. Daher kann eine Fehlermeldung an die Applikation generiert werden, welche entsprechend darauf reagieren kann.

Jedes Regelungs-/ Steuerungsmodul bzw. jede Regelungs-/ Steuerungsfunktionalität kann im Folgezyklus (im folgenden Steuerungstakt) darüber informieren, ob die von ihm generierte Stellgröße zum Einsatz gekommen war. Das entsprechende Regelungs-/ Steuerungsmodul benötigt gegebenenfalls diese Information, um eine stabile Stellgröße für den aktuellen Zyklus generieren zu können. Damit wird verhindert, dass gegebenenfalls verwendete Integratoren überlaufen und Interpolatoren weiter laufen, ohne dass der Roboter tatsächlich folgt.

Ausführungsbeispiele der Erfindung sind exemplarisch in den beigefügten schematischen Zeichnungen dargestellt. Es zeigen:
- Fig. 1: einen Roboter mit einem Roboterarm und einer Steuervorrichtung,
- Fig. 2: einen als Greifer ausgeführten Endeffektor, der ein Objekt greift und an einer Befestigungsvorrichtung des Roboterarms befestigt ist,
- Fig. 3: eine den Betrieb des Roboters veranschaulichende Tabelle,
- Fig. 4: einen weiteren als Greifer ausgeführten Endeffektor, der ein Objekt greift und an der Befestigungsvorrichtung des Roboterarms befestigt ist, und
- Fig. 5: eine weitere Tabelle.

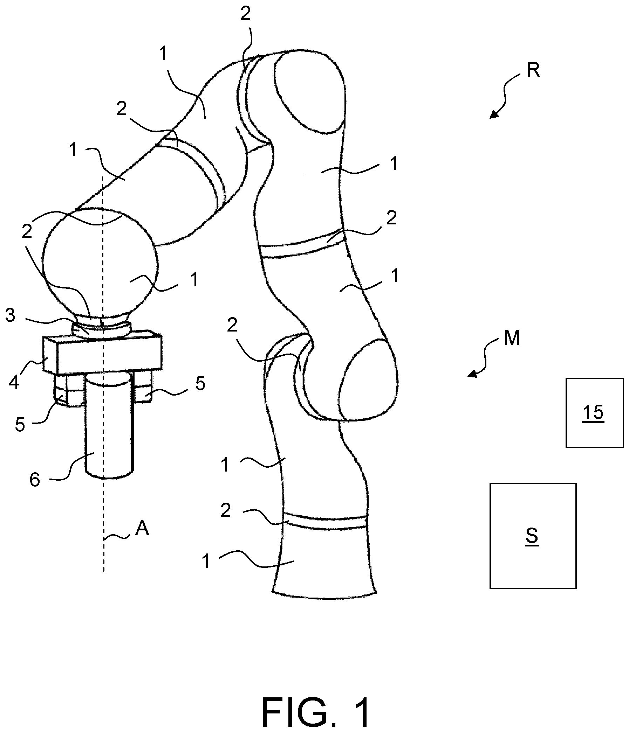

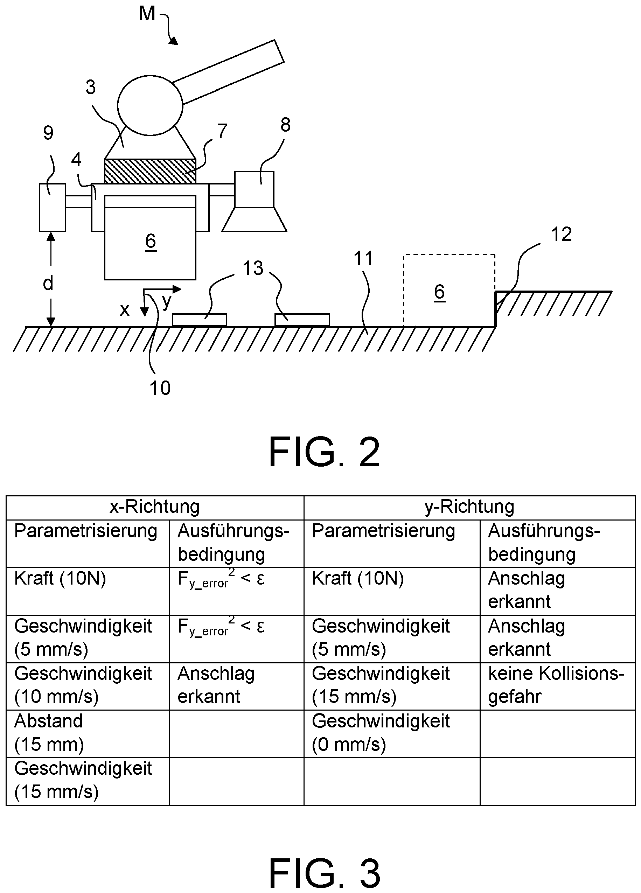

Die Fig. 1 zeigt einen Roboter R, der einen Roboterarm M und eine Steuervorrichtung S aufweist. Der Roboterarm M stellt im Wesentlichen den beweglichen Teil des Roboters R dar und umfasst mehrere, nacheinander folgende Glieder 1, die mittels Gelenke 2 miteinender verbunden sind. An einem seiner Enden weist der Roboterarm M eine Befestigungsvorrichtung 3 z.B. in Form eines Flansches auf, an dem z.B. ein Endeffektor in Form eines Greifers 4 befestigt werden kann. Der Greifer 4 weist z.B. Greifbacken 5 auf, mittels derer der Greifer 4 ein Objekt 6 halten kann, sodass dieses mittels des Roboters R bewegt werden kann. Der Greifer 4 mit gegriffenem Objekt 6, die Befestigungsvorrichtung 3 und Teile des Roboterarms M sind in der Fig. 2 näher dargestellt.

Der Roboterarm M weist ferner mit der Steuervorrichtung S verbundene, nicht näher dargestellte Antriebe auf, mittels derer die Glieder 1 bezüglich den Gelenken 2 zugeordneten Achsen relativ zueinander bewegt werden können. Im Falle des vorliegenden Ausführungsbeispiels ist in den Figuren nur eine der Achsen A gezeigt, bezüglich derer die Befestigungsvorrichtung 4 unmittelbar bewegt, insbesondere gedreht werden kann.

Die Antriebe sind z.B. elektrische Antriebe und werden insbesondere im Automatikbetrieb des Roboters R von der Steuervorrichtung S angesteuert, sodass die Befestigungsvorrichtung 3 oder ein sogenannter Tool Center Point des Roboters R automatisch eine vorbestimmte Bewegung durchführt. Zu diesem Zweck läuft auf der Steuervorrichtung S ein entsprechendes Anwenderprogramm. Die Steuervorrichtung S kann insbesondere derart ausgeführt sein, dass sie im Automatikbetrieb die Antriebe regelt. Auch der Greifer 4 ist mit der Steuervorrichtung S verbunden, sodass diese ein Greifen und Loslassen des Objekts 6 steuern kann.

Im Falle des vorliegenden Ausführungsbeispiels weist der Greifer 4 einen Kraft-/ Momentensensor 7, eine Kamera 8 und einen Abstandssensor 9 auf, die ebenfalls mit der Steuervorrichtung S verbunden sind, sodass dieser vom Kraft-/ Momentensensor 7, von der Kamera 8 und vom Abstandssensor 9 erzeugte Signale zur Verfügung stehen.

In dem in der Fig. 2 gezeigten Ausführungsbeispiel ist die Kamera 8 insbesondere eingerichtet, Bilder aus der Stoßrichtung des Greifers 4 und der Abstandssensor 9 ist eingerichtet, einen Abstand d ebenfalls in Stoßrichtung des Greifers 4 zu ermitteln. Ist z.B. der Greifer 4 derart ausgerichtet, dass dessen Stoßrichtung in x-Richtung eines kartesischen Weltkoordinatensystems 10 ausgerichtet ist, dann sind im Falle des vorliegenden Ausführungsbeispiels die Kamera 8 und der Abstandssensor 9 ebenfalls in x-Richtung des Koordinatensystems 10 ausgerichtet. Dies ist in der Fig. 2 veranschaulicht. Die Stoßrichtung des Greifers 4 ist insbesondere in Richtung der in der Fig. 1 gezeigten Achse A ausgerichtet.

Im Falle des in der Fig.2 veranschaulichten Ausführungsbeispiels soll der Roboter R das mittels des Greifers 4 gegriffene Objekt 6 auf den Boden 11 an einem Anschlag 12 abstellen. Das Objekt 6, wenn an dieser Zielposition abgestellt, ist in der Fig. 2 gestrichelt dargestellt. Um das Objekt 6 an seine Zielposition zu bewegen und dort abzustellen, ist in der Steuervorrichtung S eine Regelungs-/ bzw. Steuerungsstrategie insbesondere als Teil des Anwenderprogramms gespeichert, die in einer in der Fig. 3 gezeigten Tabelle zusammen gefasst ist.

Im Falle des vorliegenden Ausführungsbeispiels ist es vorgesehen, dass an der Zielposition das Objekt 6 in Kontakt mit der Oberfläche des Bodens 11 und mit der Oberfläche des Anschlags 12 steht. Dazu ist die Steuervorrichtung S ausgebildet, eine Kraftregelung aufgrund von von dem Kraft-/ Momentensensor 7 erzeugter Signale, eine Positionsregelung aufgrund von von der Kamera 8 erzeugter Signale und ein Abstandsregelung aufgrund von von dem Abstandssensor 9 erzeugter Signale zu realisieren. Insbesondere ist die Steuervorrichtung S derart eingerichtet, unterschiedliche Regel- und/oder Steuerstrategien unabhängig voneinander in unterschiedliche Richtungen und/oder Orientierungen bzw. Freiheitsgraden des Greifers 4 zu realisieren. Außerdem müssen gegebenenfalls auf dem Weg zur Zielposition Kollisionen mit im Vorfeld unbekannten Störungen bzw. Hindernissen 13 vermieden werden.

Im Falle des vorliegenden Ausführungsbeispiels stehen der Steuervorrichtung S aufgrund der Kamera 8, des Abstandssensors 9 und des Kraft-/ Momentensensors 7 folgende Informationen bzw. Signale zur Verfügung:
- eine gemessene Kraft F, aus der z.B. ein quadratischer Fehler F_{y_error}² in y-Richtung bezogen auf eine Sollkraft errechnet werden kann,
- aufgrund der von der Kamera 8 stammenden Signale kann die Steuervorrichtung S die Hindernisse 13 und somit eine Kollisionsgefahr während der Bewegung des Objekts 6 und den Anschlag 12 erkennen. Dies kann z.B. für eine Positionsregelung in y-Richtung verwendet werden.

Ebenso werden folgende Steuerungs-/Regelungsfunktionalitäten bereitgestellt:
- Kraftregelung insbesondere kartesische Kraftregelung basierend auf den Kraft-/ Momentensensor 7 zum Erzielen einer vorgegeben Soll-Kraft *Fsoll,* mit der das Objekt 6 den Boden 11 und den Anschlag 12 berühren soll,
- Geschwindigkeitssteuerung, insbesondere kartesische Geschwindigkeitssteuerung (Trajektorienplaner und Interpolator), mit der sich das Objekt 6, wenn in diesem Modus betrieben, bewegen soll,
- Abstandsregelung basierend auf dem Abstandssensor 9.

Im Falle des vorliegenden Ausführungsbeispiels realisiert die Steuervorrichtung S die mittels der Tabelle der Fig. 3 zusammengefasste hierarchische Regelungs-/Steuerungsstruktur und somit ein Zustandsübergang von einer zur anderen Regel- und/oder Steuerfunktionalität.

Im Falle des vorliegenden Ausführungsbeispiels bewegt die Steuervorrichtung S den Roboterarm M mittels Bahnplanung derart, sodass das Objekt 6 zumindest in die Nähe der Zielposition bewegt wird. Die Hindernisse 13 werden aufgrund der von der Kamera 8 erzeugten Signale erkannt.

Wenn das Objekt 6 in etwa die Zielposition erreicht hat, regelt die Steuervorrichtung S aufgrund der von dem Kraft-/ Momentensensor 7 erzeugter Signale sowohl in x- als auch in y-Richtung die Kontaktkraft von beispielsweise 10 N ein. Daher wird für die x- und y-Richtung die Kraftregelung mit höchster Priorität aktiviert. Diese ist aber nur aktiv, wenn die Kraftregelung Regelungsbereitschaft gemeldet hat (notwendiges Kriterium) und wenn eine Ausführungsbedingung (hinreichendes Kriterium) erfüllt ist. Für die x-Richtung bedeutet dies beispielsweise, dass das Objekt 6 bereits den Anschlag 12 erreicht hat, sodass die Kontaktkraft in y-Richtung bereits innerhalb eines vorgegeben Tolleranzbereichs liegt. In y-Richtung wird hingegen die Kraftregelung nur aktiviert, wenn sich das Objekt 6 bereits in der Nähe des Anschlags 12 befindet.

Sollten notwendiges oder hinreichendes Kriterium nicht erfüllt sein, wird die nächste, niederpriore Alternative geprüft: Hier wird in beiden Freiheitsgraden, d.h. in x- und in y-Richtung versucht, auf die Geschwindigkeitssteuerung umzuschalten, um mit der definierten Geschwindigkeit in den Kontakt zu fahren. Ist bereits das Objekt 6 am Anschlag 12, d.h. ist die Kontaktkraft in y-Richtung innerhalb des Tolleranzbereiches, wird in x-Richtung mit einer vergleichsweise niedrigen Geschwindigkeit verfahren. Ebenso wird in y-Richtung mit einer relativ niedrigen Geschwindigkeit verfahren, wenn aufgrund der von der Kamera 8 erzeugten Signale der Anschlag 12 erkannt wurde.

Solange der Anschlag 12 noch nicht erkannt wurde, wird in x-Richtung die Abstandsregelung aktiviert bzw. wenn deren notweniges Kriterium nicht erfüllt ist (Abstandmessung mittels des Abstandssensors 9 nicht möglich), die Geschwindigkeitssteuerung. Mit der Abstandsregelung kann sichergestellt werden, dass beim Heranfahren an den Anschlag 12 ein Abstand d zum Boden 11 eingehalten wird. In y-Richtung wird dagegen mit einer vergleichsweise hohen Geschwindigkeit in Richtung Anschlag 12 verfahren, solange keine Kollisionsgefahr erkannt wird.

Falls eine Kollisionsgefahr erkannt wird und keine höher priorisierte Steuerungs- bzw. Regelungsalternative die entsprechenden notwendigen und hinreichenden Kriterien erfüllen, wird die Geschwindigkeit auf Null reduziert.

Somit ist die Steuervorrichtung S eingerichtet, relativ komplexe Zustandsübergänge von einer zur anderen Steuer-/ Regelungsfunktionalität zu realisieren.

Zusammenfassend ergibt sich Folgendes: Jede Steuerungs-/Regelungsfunktionalität hat eine Priorität. Ein notwendiges Kriterium muss erfüllt sein, damit eine bestimmte Steuerungs-/Regelungsfunktionalität aktiviert werden kann. Dadurch wird die Stabilität der entsprechenden Steuerungs-/Regelungsfunktionalität sicher gestellt, d.h. die Funktionalität entscheidet, ob der Roboter R mit dieser Steuerungs-/Regelungsfunktionalität stabil gesteuert bzw. geregelt werden kann. Zusätzlich muss ein insbesondere frei definierbares hinreichendes Kriterium erfüllt sein. Dadurch wird z.B. erreicht, dass die Steuerungs-/Regelungsfunktionalität im korrekten Kontext der Anwendung zum Einsatz kommt.

Die Umschaltung einer zur anderen Steuer-/Regelungktionalität kann in beide Richtungen erfolgen (z.B. Geschwindigkeitssteuerung auf Kraftregelung und umgekehrt). Die Umschaltung erfolgt insbesondere innerhalb eines Steuerungstaktes der Steuervorrichtung S, wodurch Vorverarbeitungswartezeiten oder sonstige Aktivierungsverzögerungen vermieden werden können. Die Entscheidung wird insbesondere "reflexartig" innerhalb des Steuerungstaktes gefällt, wodurch eine langsamere Applikation/Ablaufsteuerung nicht benötigt wird.

Die Umschaltung kann pro Freiheitsgrad unabhängig voneinander erfolgen. Für einen gegebenenfalls verwendetet boolschen Ausdruck der hinreichenden Ausführungsbedingung bzw. des hinreichenden Kriteriums können beliebige Signale herangezogen werden. Diese können sowohl rohe oder verarbeitete Sensorsignale, Zwischenergebnisse von Steuerungs-/Regelungsfunktionalitäten und/oder Ergebnisse von Überwachungs-, Planungs- und Schätzalgorithmen sein.

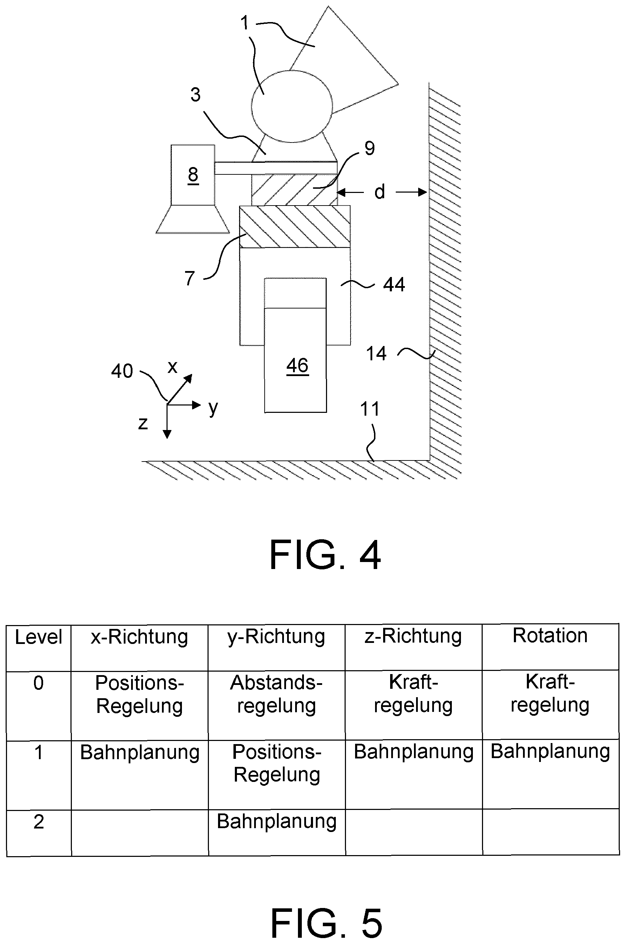

Die Fig. 4 zeigt einen alternativen Greifer 44, der anstelle des in der Fig. 2 gezeigten Greifers 4 an die Befestigungsvorrichtung 3 des Roboterarms M befestigt werden kann. Im Falle des vorliegenden Ausführungsbeispiels weist der Greifer 44 ebenfalls den Kraft-/ Momentensensor 7, die Kamera 8 und den Abstandssensor 9 auf, die ebenfalls mit der Steuervorrichtung S verbunden sind, sodass dieser vom Kraft-/ Momentensensor 7, von der Kamera 8 und vom Abstandssensor 9 erzeugten Signale zur Verfügung stehen.

In dem in der Fig. 4 gezeigten Ausführungsbeispiels ist die Kamera 8 insbesondere eingerichtet, zweidimensionale Bilder von der Ebene senkrecht zur Stoßrichtung des Greifers 44 aufzunehmen. Der Abstandssensor 9 ist eingerichtet, einen Abstand d in Richtung senkrecht zur Stoßrichtung des Greifers 44 zu ermitteln. Ist z.B. der Greifer 44 derart ausgerichtet, dass dessen Stoßrichtung in z-Richtung eines kartesischen Weltkoordinatensystems 40 ausgerichtet ist, dann ist im Falle des vorliegenden Ausführungsbeispiels die Kamera 8 eingerichtet, zweidimensionale Bilder in der x-y Ebene des Koordinatensystems 40 aufzunehmen, und der Abstandssensor 9 ist in y-Richtung des Koordinatensystems 40 ausgerichtet. Dies ist in der Fig. 4 veranschaulicht. Die Kamera 8 dient insbesondere als Positionsmesssystem, das die relativ grobe Lage der Zielposition in x- und y-Richtung bestimmt. Diese Information kann zur Positionsregelung in x- und y-Richtung herangezogen werden.

Im Falle des in der Fig. 4 veranschaulichten Ausführungsbeispiels soll der Roboter R ein mittels des Greifers 44 gegriffenes Objekt 46 auf den Boden 11 in einem vorgegebenen Abstand dₛₒₗₗ von einer Seitenwand 14 abstellen. Um das Objekt 46 an seiner Zielposition zu bewegen und dort abzustellen, ist in der Steuervorrichtung S eine Regelungs-/ bzw. Steuerungsstrategie gespeichert, die in einer in einer in der Fig. 5 gezeigten Tabelle zusammen gefasst ist.

Zunächst steuert die Steuervorrichtung S die Antriebe des Roboterarms M derart an, dass diese das Objekt 46 entlang einer vorgegebenen Bahn zumindest annähernd an die Zielposition des Objekts 46 bewegt.

Sobald es für den Freiheitsgrad in x-Richtung des Koordinatensystems 40 möglich ist, die Bewegung in x-Richtung mittels mit kamerabasierter Positionsregelung fortzufahren, schaltet für diesen Freiheitsgrad automatisch die Steuervorrichtung S in eine Positionsregelung. Die Steuervorrichtung S erkennt die Möglichkeit der Positionsregelung in x-Richtung aufgrund der von der Kamera 8 erzeugten Signale.

Sobald es für den Freiheitsgrad in y-Richtung des Koordinatensystems 40 möglich ist, die Bewegung in y-Richtung mittels Positionsregelung fortzufahren, schaltet für diesen Freiheitsgrad automatisch die Steuervorrichtung S ebenfalls in eine Positionsregelung. Die Steuervorrichtung S erkennt die Möglichkeit der Positionsregelung in y-Richtung ebenfalls aufgrund der von der Kamera 8 erzeugten Signale. Ist das Objekt 46 nahe genug an die Seitewand 14 heranbewegt, sodass der Abstandssensor 9 verlässlich den Abstand d ermitteln kann, dann schaltet automatisch die Steuervorrichtung S auf eine Abstandsregelung für die y-Richtung.

Sobald es für den Freiheitsgrad in z-Richtung des Koordinatensystems 40 möglich ist, die Bewegung in z-Richtung mittels Kraftregelung fortzufahren, schaltet für diesen Freiheitsgrad automatisch die Steuervorrichtung S in eine Kraftregelung. Die Steuervorrichtung S erkennt beispielsweise die Möglichkeit der Kraftregelung in z-Richtung aufgrund einer vom Kraft-/ Momentensensor 7 erzeugten Signale, die einer auf den Greifer 44 bzw. dem Objekt 46 und mittels des Kraft-/ Momentensensors 7 ermittelten Mindestkraft zugeordnet sind.

Für die Freiheitsgrade bezüglich der restlichen 3 Freiheitsgrade (Orientierung bzw. Rotation) des Greifers 46 wird im Falle des vorliegenden Ausführungsbeispiels ebenfalls von der Bahnplanung auf eine Kraftregelung umgeschaltet, sobald dies möglich ist.

Folglich muss für die beschriebene Umschaltungen von einer Regelungs-/ bzw. Steuerungsstrategie zur nächst höher priorisierten jeweils ein notwendiges Kriterium erfüllt sein, damit eine bestimmte höher priorisierte Steuerungs-/Regelungsfunktionalität aktiviert werden kann bzw. wird. Dadurch wird die Stabilität der entsprechenden Steuerungs-/Regelungsfunktionalität sicher gestellt, d.h. die Funktionalität entscheidet, ob der Roboter R mit dieser Steuerungs-/Regelungsfunktionalität stabil gesteuert bzw. geregelt werden kann.

Zusätzlich muss für das Umschalten in die höher priorisierte Steuerungs-/Regelungsfunktionalität noch ein insbesondere frei definierbares hinreichendes Kriterium erfüllt sein. Dies wird z.B. durch eine sensorische Erfassung der Umgebung erfüllt. Das notwendige Kriterium kann sich z.B. aufgrund eines aktuellen Zustands eines anderen Freiheitsgrades ergeben oder kann auch ein Sicherheitskriterium sein, beispielsweise dass eine Umschaltung in eine höher priorisierte Steuerungs-/Regelungsfunktionalität nur dann erfolgt, wenn bestimmte vorgegebene oder vorgebbare Sicherheitsregeln erfüllt sind. So ist es z.B. möglich, dass eine externe Sicherheitssteuerung 15, die mit der Steuervorrichtung S des Roboters R verbunden ist, R z.B. ein "Veto" einlegt, wenn sich z.B. der Roboter R für die Positionsregelung zu nah an einer singulären Stellung befindet, da dann eine Gefahr einer Überschreitung von Achsgeschwindigkeiten gegeben sein können. Ebenso könnte die Sicherheitssteuerung 15 die Aktivierung von Regelkreisen verhindern, wenn sich der Roboter R in einer Betriebsart befindet, in der aus sicherheitstechnischen Gründen bestimmte, auf externen Sensoren basierte Regelkreise verboten sind (z.B. Inbetriebnahmemodus). In gleicher Weise kann die Sicherheitssteuerung 15 verhindern, dass auf Regelungs- und Steuerungsfunktionalitäten umgeschaltet wird, die, wenn sich der Roboter R zu nah am Rand eines Arbeitsraumes befindet oder wenn sich sogar Personen im Arbeitsraum befinden, für den Benutzer gefährlich werden können.

Das erfindungsgemäße Verfahren kann nicht nur für den Automatikbetrieb verwendet werden, sondern in anderen Roboter Betriebsarten (z.B. Inbetriebnahme oder Handverfahren), in denen der Roboterarm M automatisch mit Hilfe der Steuervorrichtung S bewegt wird.

## Patentansprüche

1. Verfahren zum Betreiben eines Roboters (R), der einen mehrere, nacheinander folgende Glieder (1), eine Befestigungsvorrichtung (3) zum Befestigen eines Endeffektors (4, 46) und Antriebe zum Bewegen der Glieder (1) aufweisenden Roboterarm (M) und eine mit den Antrieben verbundene Steuervorrichtung (S) aufweist, in der eine hierarchische Regelungs-/Steuerungsstrategie mit mehreren, unterschiedlich priorisierten Regelungs-/ Steuerungsfunktionalitäten gespeichert ist, aufweisend folgenden Verfahrensschritt: während der Bewegung des Roboterarms (M), Umschalten in eine höher priorisierte Regelungs-/ Steuerungsfunktionalität, sobald eine stabile Bewegung des Roboterarms (M) mittels der höher priorisierten Regelungs-/ Steuerungsfunktionalität möglich ist und eine, von der höher prioristierten Regelungs-/ Steuerungsfunktionalität unabhängige Ausführungsbedingung erfüllt ist, wobei für wenigstens zwei für die Bewegung des Roboterarms (M) vorgesehene Freiheitsgrade voneinander unabhängige priorisierte Regelungs-/ Steuerungsfunktionalitäten vorhanden sind und für wenigstens einen der Freiheitsgrade ein Umschalten in eine höher priorisierte Regelungs-/ Steuerungsfunktionalität erfolgt, sobald eine stabile Bewegung des Roboterarms (M) mittels der entsprechenden höher prioristierten Regelungs-/ Steuerungsfunktionalität möglich ist und zumindest für diesen Freiheitsgrad die, von der höher prioristierten Regelungs-/ Steuerungsfunktionalität unabhängige Ausführungsbedingung erfüllt ist.

2. Verfahren nach Anspruch 1, zusätzlich aufweisend den folgenden Verfahrensschritt: während der Bewegung des Roboterarms (M), Umschalten in eine nieder priorisierte Regelungs-/ Steuerungsfunktionalität, sobald die von der höher priorisierten Regelungs-/ Steuerungsfunktionalität unabhängige Ausführungsbedingung nicht mehr erfüllt ist und/oder eine stabile Bewegung des Roboterarms (M) mittels der höher priorisierten Regelungs-/ Steuerungsfunktionalität unmöglich ist.

3. Verfahren nach Anspruch 1 oder 2, bei dem die unabhängige Ausführungsbedingung einem anderen Freiheitsgrad zugeordnet ist als dem der fraglichen Regelungs-/ Steuerungsfunktionalität.

4. Verfahren nach einem der Ansprüche 1 bis 3, bei dem die Ausführungsbedingung einer Sicherheitsbedingung des Roboters (R) zugeordnet ist.

5. Verfahren nach Anspruch 4, aufweisend Überprüfen der Sicherheitsbedingung durch eine Sicherheitssteuerung (15).

6. Roboter, aufweisend
- einen Roboterarm (M), der mehrere nacheinander folgende Glieder (1), eine Befestigungsvorrichtung (3) zum Befestigen eines Endeffektors (4, 46) und Antriebe zum Bewegen der Glieder (1) aufweist, und
- eine mit den Antrieben verbundene Steuervorrichtung (S), in der eine hierarchische Regelungs-/ Steuerungsstrategie mit mehreren, unterschiedlich priorisierten Regelungs-/ Steuerungsfunktionalitäten gespeichert ist und die eingerichtet ist, den Roboterarm (M) gemäß dem Verfahren nach einem der Ansprüche 1 bis 5 zu bewegen.

## Claims

1. Method for operating a robot (R), which comprises a plurality of, successive links (1), a securing device (3) for securing an end effector (4, 46) and drives for moving the robot arm (M) comprising links (1) and a control device (S) connected to the drives, in which a hierarchical regulatory/control strategy is saved with a plurality of differently prioritised regulatory and control functionalities, comprising the following method step: during the movement of the robot arm (M) switching into a higher prioritised regulatory/control functionality, as soon as a stable movement of the robot arm (M) is possible by means of the higher prioritised regulatory/control functionality and an execution condition independent of the higher prioritised regulatory/control functionality has been met,
wherein for at least two degrees of freedom provided for the movement of the robot arm (M) independent prioritised regulatory/control functionalities are provided and for at least one of the degrees of freedom a switch is made to a higher prioritised regulatory/control functionality, as soon as a stable movement of the robot arm (M) is possible by means of the corresponding higher prioritised regulatory/control functionality and at least for this degree of freedom the execution condition independent of the higher prioritised regulatory/control functionality is met.

2. Method according to claim 1, additionally comprising the following method step: during the movement of the robot arm (M), switching into a lower prioritised regulatory/control functionality, as soon as the execution condition independent of the higher prioritised regulatory/control functionality is no longer met, and/or a stable movement of the robot arm (M) is impossible by means of the higher prioritised regulatory/control functionality.

3. Method according to claim 1 or 2, wherein the independent execution condition is assigned to a different degree of freedom than that of the regulatory/control functionality in question.

4. Method according to any of claims 1 to 3, wherein the execution condition is assigned to a safety condition of the robot (R).

5. Method according to claim 4, comprising checking the safety condition by means of a safety control (15).

6. Robot comprising
- a robot arm (M), which has a plurality of successive links (1), a securing device (3) for securing an end effector (4, 46) and drives for moving the links (1), and
- a control device (S) connected to the drives, in which control device a hierarchical regulatory/control strategy is saved with a plurality of differently prioritised regulatory/control functionalities and which is configured to move the robot arm (M) according to the method of any of claims 1 to 5.

## Revendications

1. Procédé de fonctionnement d'un robot (R) qui présente un bras de robot (M) présentant plusieurs membres (1) successifs, un dispositif de fixation (3) pour fixer un effecteur terminal (4, 46) et des entraînements pour déplacer les membres (1), et un dispositif de commande (S) relié aux entraînements, dans lequel est mémorisée une stratégie de commande/régulation hiérarchique avec plusieurs fonctionnalités de commande/régulation de priorités différentes, présentant l'étape de procédé suivante : pendant le mouvement du bras de robot (M), commutation dans une fonctionnalité de commande/régulation de priorité supérieure, dès qu'un mouvement stable du bras de robot (M) est possible au moyen de la fonctionnalité de commande de priorité supérieure et qu'une condition d'exécution indépendante de la fonctionnalité de commande de priorité supérieure est remplie, dans lequel pour au moins deux degrés de liberté prévus pour le mouvement du bras de robot (M), il existe des fonctionnalités de commande/régulation priorisées indépendantes les unes des autres, et pour au moins l'un des degrés de liberté, une commutation dans une fonctionnalité de commande/régulation de priorité supérieure a lieu dès qu'un mouvement stable du bras de robot (M) est possible au moyen de la fonctionnalité de commande/régulation de priorité supérieure correspondante, et au moins pour ce degré de liberté, la condition d'exécution indépendante de la fonctionnalité de commande/régulation de priorité supérieure est remplie.

2. Procédé selon la revendication 1, comprenant en outre l'étape de procédé suivante : pendant le mouvement du bras de robot (M) commutation dans une fonctionnalité de commande/régulation de priorité inférieure dès que la condition d'exécution indépendante de la fonctionnalité de commande/régulation de priorité supérieure est remplie et/ou qu'un mouvement stable du bras du robot (M) est impossible au moyen de la fonctionnalité de commande de priorité supérieure.

3. Procédé selon la revendication 1 ou 2, dans lequel la condition d'exécution indépendante est associée à un degré de liberté différent de celui de la fonctionnalité de contrôle en question.

4. Procédé selon l'une quelconque des revendications 1 à 3, dans lequel la condition d'exécution est associée à une condition de sécurité du robot (R).

5. Procédé selon la revendication 4, comprenant la vérification de la condition de sécurité par un contrôleur de sécurité (15).

6. Robot comprenant
- un bras de robot (M) qui présente une pluralité de membres (1) successifs, un dispositif de fixation (3) pour fixer un effecteur terminal (4, 46) et des entraînements pour déplacer les membres (1), et
- un dispositif de commande (S) relié aux entraînements, dans lequel est mémorisée une stratégie de commande/régulation hiérarchique avec plusieurs fonctionnalités de commande/régulation de priorités différentes et qui est configuré pour déplacer le bras de robot (M) selon le procédé selon l'une quelconque des revendications 1 à 5.
